# EUROPEAN PATENT SPECIFICATION

(11) **EP 3 388 714 B1**
(45) Date of publication and mention of the grant of the patent: **05.05.2021**
(21) Application number: 18162233.3
(22) Date of filing: 16.03.2018
(51) Int. Cl.: F16H 3/093, F16H 3/095, F16H 3/00, F16H 37/04

(54) **TRANSMISSION UNIT**
ÜBERTRAGUNGSEINHEIT
UNITÉ DE TRANSMISSION

(30) Priority: 10.04.2017 IT 201700039128
(43) Date of publication of application: 17.10.2018
(73) Proprietor: E.M.T.B. Engineering Machinery Tooling Bolzano S.R.L., 39100 Bolzano (BZ) (IT)
(72) Inventor: BARUFFALDI, Fiorenzo, 39100 Bolzano (IT)
(74) Representative: Corradini, Corrado

(56) References cited:
- CN-A- 105 202 128
- TW-A- 201 507 887

## Description

### TECHNICAL FIELD

The present invention concerns a mechanical transmission unit, in particular it concerns a mechanical transmission unit for motor vehicles.

### PRIOR ART

In the field of vehicles for transporting people and/or goods, for some time transmission units equipped with double-clutch discontinuous speed gears have been common, which, making it possible to reduce the time necessary to carry out a gear change with respect to a conventional discontinuous speed gear, improve the regularity of the acceleration of the vehicle and reduce the fuel consumption for the same travel speed.

Double clutch discontinuous speed gears generally comprise an input shaft that rotates as a unit with an output shaft of the motor of the vehicle and transmits, through suitable transmission means, the rotary motion to a first and a second shaft, which in turn transmit the motion to an output shaft of the speed gear.

The first shaft and the second shaft are associated with different gears that make different gear ratios, generally one shaft carries the gears of the even speed gears and the other carries the gears of the odd speed gears.

The first and the second shaft can be selectively coupled and decoupled with/from the input shaft through a pair of clutches, each acting on a single shaft.

This solution makes it possible to transfer the motion to the driving wheels through only one of the two shafts while simultaneously the gear that makes a higher or lower gear ratio than that currently in use is pre-engaged on the other.

At the moment of the gear change it is sufficient to act on the clutches to decouple from the input shaft the shaft that transferred the motion to the driving wheels and simultaneously couple the input shaft with the other shaft, to which the gear that makes the higher or lower gear ratio had been pre-engaged.

It can be worked out that this type of speed gear needs a management software configured to provide for the requests of the driver of the vehicle so as to decide whether to engage a gear that makes a greater gear ratio than that currently used or a lower gear ratio.

A known problem of this solution is that such software has high implementation costs.

Another known problem of the solution is that, in driving conditions that cannot be predicted by the electronic management of the speed gear, consider for example the need to go through one or more gears to overtake, the response of the speed gear is particularly slow.

The slowness in engaging the gears can potentially create dangerous situations given the delay, which the driver is not used to when travelling in normal driving conditions, between the moment at which the driver of the vehicle imparts the command and the moment at which the speed gear is ready to carry out such a command.

Documents TW201507887 and CN105202128 disclose three-clutch transmission units, which are capable of making available, simultaneously and under load: a selected (predetermined) forward gear ratio, a forward gear ratio higher than the selected gear ratio, and a forward gear ratio lower than the selected gear ratio.

A known problem of those solutions is that they partially overcome the obove mentioned drawbacks only during forward motion.

A purpose of the present invention is to overcome this drawback of the prior art, in a simple, rational and low-cost solution.

Such purposes are accomplished by the characteristics of the invention given in the independent claim.

The dependent claims outline preferred and/or particularly advantageous aspects of the invention.

### PRESENTATION OF THE INVENTION

The invention provides a transmission unit for motor vehicles according to claim 1.

Thanks to the particular architecture of the transmission unit it is not necessary to make complex management software that provide for the needs of the driver of the vehicle much earlier as occurs in the devices of the prior art. According to a preferred aspect of the invention, the transmission unit can indeed comprise a control unit, which is configured to make a predetermined overall gear ratio in the first speed gear, a higher overall gear ratio in the second speed gear and a lower overall gear ratio in the third speed gear.

In this way, the operation of the control unit is extremely simple and does not require the implementation of predictive algorithms.

Moreover, again thanks to the particular architecture of the transmission unit, the selection devices of the gear ratios can be smaller in size, thus more cost-effective, with respect to those used in a conventional transmission unit studied for a same application. This is because the selection of a gear ratio can occur at a moment in time far from the moment of its actual use, i.e. more time is available with respect to the devices of the prior art for selecting a gear ratio.

Such a characteristic is particularly advantageous in the field of farming vehicles and/or earth-moving vehicles, in which the transmission members are of substantial size due to the high driving torques that must be transmitted and thus have high inertias that require powerful and expensive selection devices so that the change of gear takes place in reasonable time periods.

Furthermore, thanks to such a solution, even under load, the transmission unit makes it possible to engage a gear ratio that makes at least one reverse gear.

According to another aspect of the invention the first speed gear, the second speed gear and the third speed gear are mesh gearboxes.

In this way, a transmission unit is provided with very high efficiency, for example higher than a continuous speed gear, i.e. a continuous variator.

Preferably, the first speed gear, the second speed gear, the third speed gear and the fourth speed gear can be substantially identical.

According to a further aspect of the invention the first transmission member, the second transmission member, the third transmission member and the fourth transmission member can each comprise a gear adapted to connect the input shaft to the respective driving shaft.

In this way the transmission of motion takes place with a very high efficiency. According to another aspect of the invention, the first driving shaft, the second driving shaft, the third driving shaft and the fourth driving shaft can be parallel to the input shaft and eccentric with respect to it.

In this way the transmission unit is extremely compact and equipped with a reduced axial bulk.

### BRIEF DESCRIPTION OF THE DRAWINGS

Further characteristics and advantages of the invention will become clearer from reading the following description provided as an example and not for limiting purposes, with the help of the figures illustrated in the attached tables.
Figure 1 is a schematic view of a vehicle on which a transmission unit according to the invention is installed.

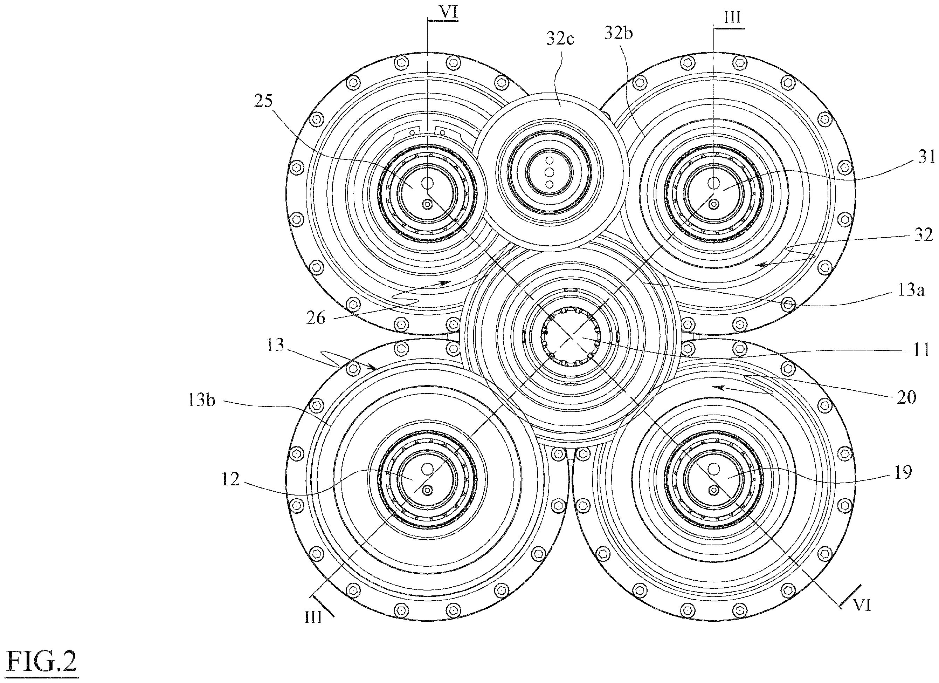

Figure 2 is a front view of the transmission unit according to the invention.

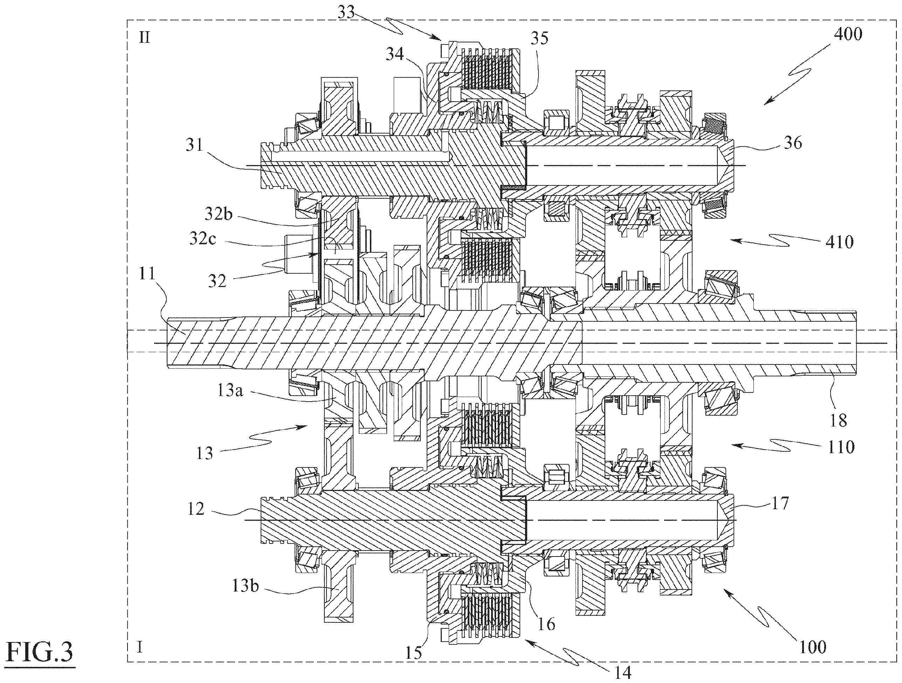

Figure 3 is a view according to the section plane III-III of the transmission unit in figure 2.
Figure 4 is an enlargement of a first sector of figure 3.
Figure 5 is an enlargement of a second sector of figure 3.

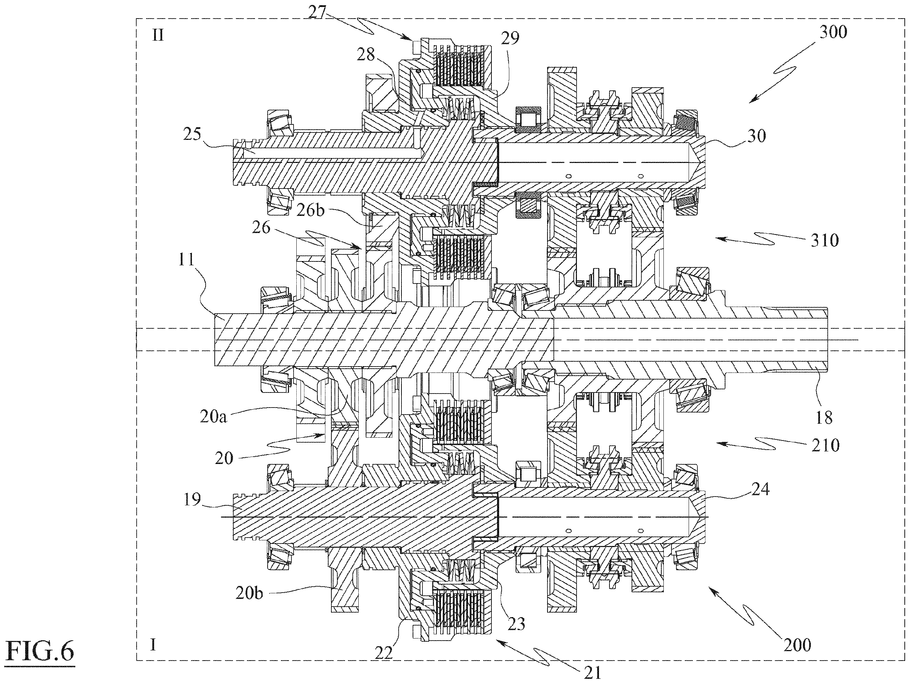

Figure 6 is a view according to the section plane VI-VI of the transmission unit in figure 2.
Figure 7 is an enlargement of a first sector of figure 6.
Figure 8 is an enlargement of a second sector of figure 6.

### BEST EMBODIMENT OF THE INVENTION

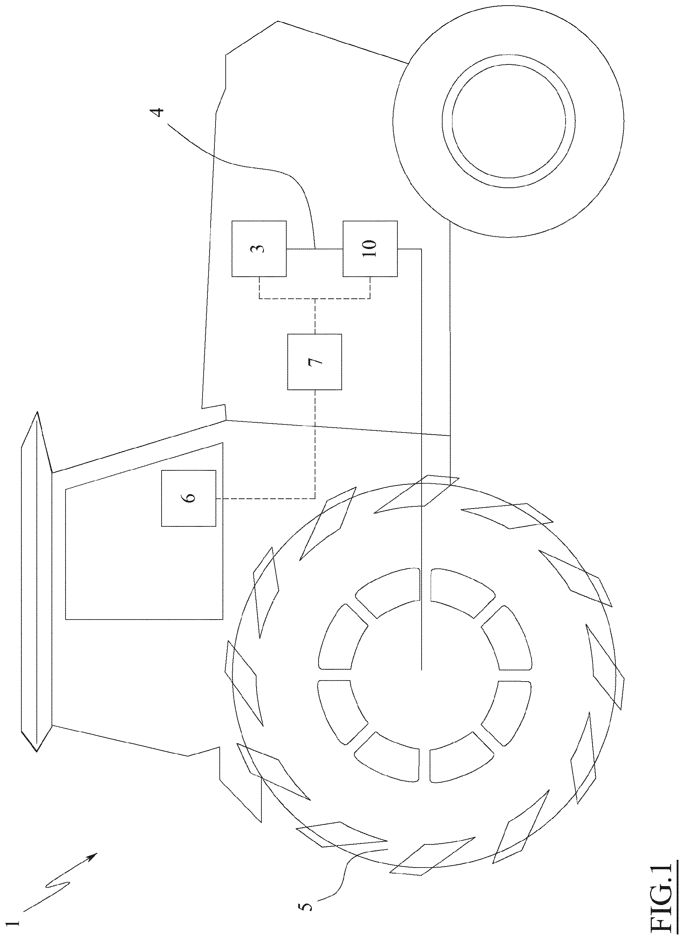

With particular reference to figure 1, a transmission unit for a motor vehicle 1, which can for example be an earth-moving vehicle or a farming vehicle, has been globally indicated with 10.

The vehicle 1 comprises a frame, a motor 3 fixed to the frame and equipped with an output shaft 4, and a pair of driving wheels 5.

The transmission unit 10 is adapted to transmit and modulate the motion from the output shaft 4 to the driving wheels 5.

The vehicle 1 is also equipped with control means 6 for the actuation of the motor 3 and of the transmission unit 10.

The transmission unit 10 comprises a casing (not illustrated in the drawings) fixed to the frame of the vehicle 1 and an input shaft 11 at least partially contained in the casing and rotatably associated with it through a pair of bearings housed in suitable seats formed in the casing.

The casing can for example be at least partially filled with a lubricant fluid.

The input shaft 11 has a first end fixedly connected in rotation to the output shaft 4 of the motor 3.

For example, the first end of the input shaft 11 has a grooved profile for the coupling with the output shaft 4 of the motor 3.

The transmission unit 10 also comprises a first driving shaft 12, for example parallel and eccentric with respect to the input shaft 11.

The first driving shaft 12 is completely contained in the casing and is rotatably associated with it through a pair of bearings housed in suitable seats formed in the casing.

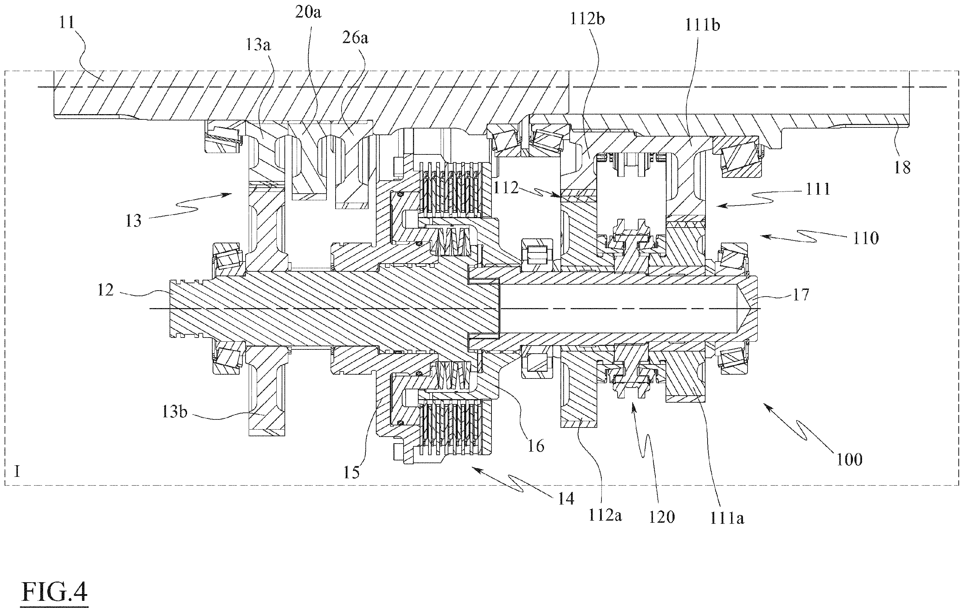

The transmission unit 10 comprises a first transmission member adapted to mechanically connect the input shaft 11 with the first driving shaft 12 (see figure 4).

The first transmission member comprises a gear 13 to transmit the motion from the input shaft 11 to the first driving shaft 12.

Purely as an example, the gear 13 makes a gear ratio comprised between 0.6 and 0.9, preferably equal to 0.85.

It should be specified that the term gear ratio of a gear is meant to indicate the ratio between the absolute value of the rotation speed of the driven shaft, which in the case of the first transmission member is the first driving shaft 12, and the absolute value of the rotation speed of the drive shaft, which in the case of the first transmission member is the input shaft 11.

The gear 13 of the first transmission member comprises a first toothed wheel 13a rotating as a unit with the input shaft 11 and a second toothed wheel 13b, which rotates as a unit with the first driving shaft 12 and engages with the first toothed wheel 13a.

The toothed wheels 13a,13b are for example toothed wheels having straight teeth.

This does not rule out the possibility that the first transmission member can comprise, instead of the gear 13, a pair of toothed wheels connected through a flexible transmission member, for example a chain, and configured to make the same gear ratio of the gear 13.

The transmission unit 10 comprises a first clutch 14 equipped with a first portion 15 associated with the first driving shaft 12, a second portion 16 opposite the first portion 15 and means for selectively coupling in rotation and decoupling the first portion 14 and the second portion 16.

The first portion 15 of the first clutch 14 is rigidly connected to an end of the first driving shaft 12.

For example, the end of the first driving shaft 12 to which the first portion 15 of the first clutch 14 is connected is the distal end with respect to the output shaft 4 of the motor 3.

The first clutch 15 is entirely contained inside the casing and can for example be a multi-disc clutch in an oil bath.

The transmission unit 10 also comprises a first driven shaft 17, for example coaxial to the first driving shaft 12, equipped with an end associated with the second portion 16 of the first clutch 15.

For example, said end of the first driven shaft 17 is rigidly connected to the second portion 16 of the clutch 15.

The transmission unit 10 also comprises an output shaft 18, which for example is coaxial to the input shaft 11 and is at least partially contained inside the casing.

The first driven shaft 17 is connected to the output shaft 18 through a first discontinuous speed gear 100 (see figure 4).

The first speed gear 100 comprises a group of gears 110 selectively adapted for connecting the first driven shaft 17 with the output shaft 18.

The group of gears 110 of the first speed gear 100 comprises a first gear 111 and a second gear 112 configured to make a greater gear ratio than the gear ratio of the first gear 111.

For example, the gear ratio of the first gear 111 is equal to a value comprised between 0.6 and 0.9, preferably equal to 0.79, whereas the jump in speed between the second gear 112 and the first gear 111 of the first speed gear 100 is equal to a value comprised between 1.4 and 1.8, preferably equal to 1.6.

The gears 111,112 of the first speed gear 100 are positioned so that going from the end of the first driven shaft 17 proximal to the first clutch 14 to the distal end firstly the second gear 112 is encountered, and then the first gear 111.

This does not rule out the possibility that the group of gears 110 can comprise further gears so as to increase the number of gear ratios available.

Every gear 111,112 of the group of gears 110 of the first speed gear 100 comprises a respective first toothed wheel 111a,112a rotatably associated with the first driven shaft 17 and a respective second toothed wheel 111b,112b, which rotates as a unit with the output shaft 18 of the transmission unit 10 and engages with the corresponding first toothed wheel 111a,112a.

Every first toothed wheel 111a,112a is rotatably associated with the first driven shaft 17 of the transmission unit 10 through a bearing, for example a roller bearing.

The toothed wheels of the first speed gear 100 are for example of the type with straight teeth.

The first speed gear 100 is equipped with a selection device configured to fixedly connect one first toothed wheel 111a,112a at a time of the group of gears 110 to the first driven shaft 17.

The selection device of the first speed gear 100 comprises a synchroniser 120 axially interposed between the second gear 112 and the first gear 111 and mobile between a first position in which it carries the first driven shaft 17 to the speed of the first toothed wheel 111a and then rigidly connects such a first toothed wheel 111a to the first driven shaft 17, a second position in which it carries the first driven shaft 17 to the speed of the first toothed wheel 112a and then rigidly connects such a first toothed wheel 112a to the first driven shaft 17, and a third position, in which it does not connect any first toothed wheel 111a, 112a to the first driven shaft 17 and does not act on the speed of the first driven shaft 17.

The synchroniser 120 is a device known to those skilled in the art and therefore not described any further.

The selection device of the first speed gear 100 comprises actuation means of the synchroniser 120, such actuation means being neither described nor illustrated since they are of the type known to those skilled in the art.

In an alternative embodiment the selection device of the first speed gear 100 can comprise, replacing the synchroniser 120, at least one electric motor configured to carry the first driven shaft 17 to the speed of the first toothed wheel 111a,112a to be made fixedly connected to said first driven shaft 17 and a coupling apparatus adapted for making said first toothed wheel 111a,112a rotate as a unit with the first driven shaft 17.

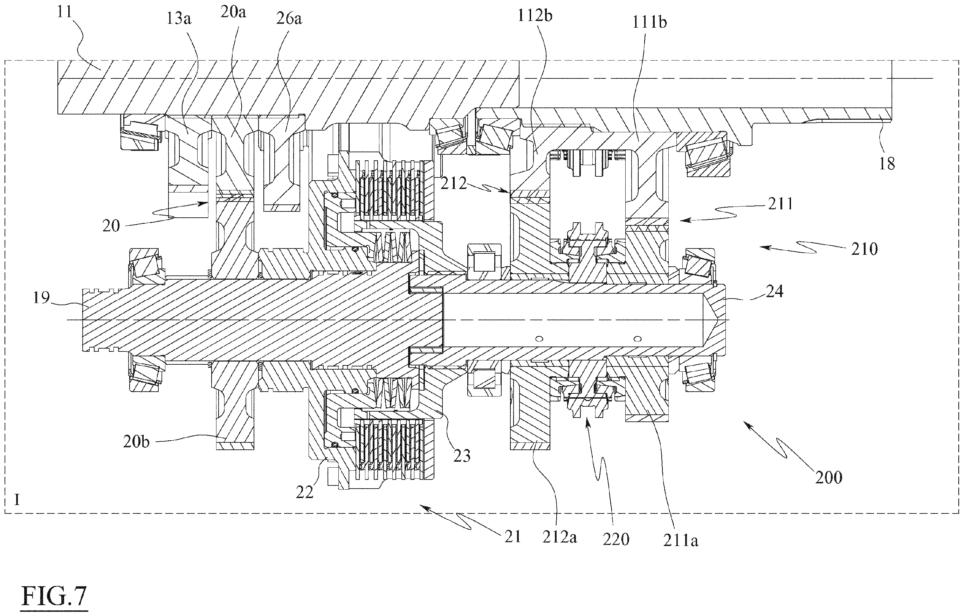

As illustrated in figure 7, the transmission unit 10 comprises a second driving shaft 19 and a second transmission member adapted to mechanically connect the input shaft 11 to said second driving shaft 19.

The second driving shaft 19 is parallel and eccentric both to the input shaft 11 and to the first driving shaft 12.

The second transmission member comprises a gear 20, which makes a higher gear ratio than the gear ratio of the gear 13 of the first transmission member.

For example, the gear 20 makes a gear ratio comprised between 0.9 and 1.1, preferably equal to 1.

The gear 20 of the second transmission member comprises a first toothed wheel 20a rotating as a unit with the input shaft 11 and a second toothed wheel 20b, which rotates as a unit with the second driving shaft 19 and engages with the first toothed wheel 20a.

The toothed wheels 20a,20b are for example toothed wheels with straight teeth.

This does not rule out the possibility that the second transmission member can comprise, instead of the gear 20, a pair of toothed wheels connected through a flexible transmission member, for example a chain, and configured to make the same gear ratio as the gear 20.

The transmission unit 10 comprises a second clutch 21 equipped with a first portion 22 associated with the second driving shaft 19, a second portion 23 opposite the first portion 22 and means for selectively coupling in rotation and decoupling the first portion 22 and the second portion 23.

The first portion 22 of the second clutch 21 is rigidly connected to an end of the second driving shaft 19, for example to the distal end with respect to the output shaft 4 of the motor 3.

The second clutch 21 is entirely contained inside the casing and can for example be a multi-disc clutch in an oil bath.

The transmission unit 10 comprises a second driven shaft 24, which is equipped with an end connected to the second portion 23 of the second clutch 21 and is, for example, coaxial to the second driving shaft 19.

The transmission unit 10 comprises a second discontinuous speed gear 200 adapted to mechanically connect the second driven shaft 24 to the output shaft 18.

The second speed gear 200 is substantially identical to the first speed gear 100.

The second speed gear 200 comprises a group of gears 210 selectively adapted for connecting the second driven shaft 24 with the output shaft 18.

The group of gears 210 of the second speed gear 200 comprises a first gear 211 and a second gear 212 configured to make a higher gear ratio than the gear ratio of the first gear 211.

For example, the gear ratio of the first gear 211 of the second speed gear 200 is equal to the gear ratio of the first gear 111 of the first speed gear 100 and the gear ratio of the second gear 212 of the second speed gear 200 is equal to the gear ratio of the second gear 112 of the first speed gear 100.

The gears 211,212 of the second speed gear 200 are positioned so that going from the end of the second driven shaft 24 proximal to the second clutch 21 to the distal end firstly the second gear 212 is encountered, then the first gear 211.

This does not rule out the possibility that the group of gears 210 can comprise further gears so as to increase the number of gear ratios available.

Every gear 211,212 of the second speed gear 200 comprises a respective first toothed wheel 211a,212a rotatably associated with the second driven shaft 24 and a respective second toothed wheel that coincides with a corresponding second toothed wheel 111b,112b of the first speed gear 100.

Every second toothed wheel 111b,112b rotates as a unit with the output shaft 18 of the transmission unit 10 and engages both with the corresponding first toothed wheel 111a,112a of the first speed gear 100, and with the corresponding first toothed wheel 211a,212a of the second speed gear 200.

Every first toothed wheel 211a,212a is rotatably associated with the second driven shaft 24 of the transmission unit 10 through a bearing, for example a roller bearing.

The toothed wheels of the second speed gear 200 are for example of the type with straight teeth.

The second speed gear 200 is equipped with a selection device configured to make one first toothed wheel 211a,212a at a time of the group of gears 210 fixedly connected to the second driven shaft 24.

The selection device of the second speed gear 200 can be actuated at the same time as the selection device of the first speed gear 100.

The selection device of the second speed gear 200 comprises a synchroniser 220 axially interposed between the second gear 212 and the first gear 211 and mobile between a first position, in which it carries the second driven shaft 24 to the speed of the first toothed wheel 211a and then rigidly connects such a first toothed wheel 211a to the second driven shaft 24, a second position, in which it carries the second driven shaft 24 to the speed of the first toothed wheel 212a and then rigidly connects such a first toothed wheel 212a to the second driven shaft 24, and a third position, in which it does not connect any first toothed wheel 211a,212a to the second driven shaft 24 and it does not act on the speed of the second driven shaft 24.

The synchroniser 220 is a device that is known by those skilled in the art and therefore it is not described any further.

The selection device of the second speed gear 200 comprises actuation means of the synchroniser 220, such actuation means being neither described nor illustrated since they are of the type known to those skilled in the art.

In an alternative embodiment, the selection device of the second speed gear 200 can comprise, instead of the synchroniser 220, at least one electric motor configured to carry the second driven shaft 24 to the speed of the first toothed wheel 211a,212a to be made fixedly connected to said second driven shaft 24 and a coupling apparatus adapted for making said first toothed wheel 211a,212a rotate as a unit with the second driven shaft 24.

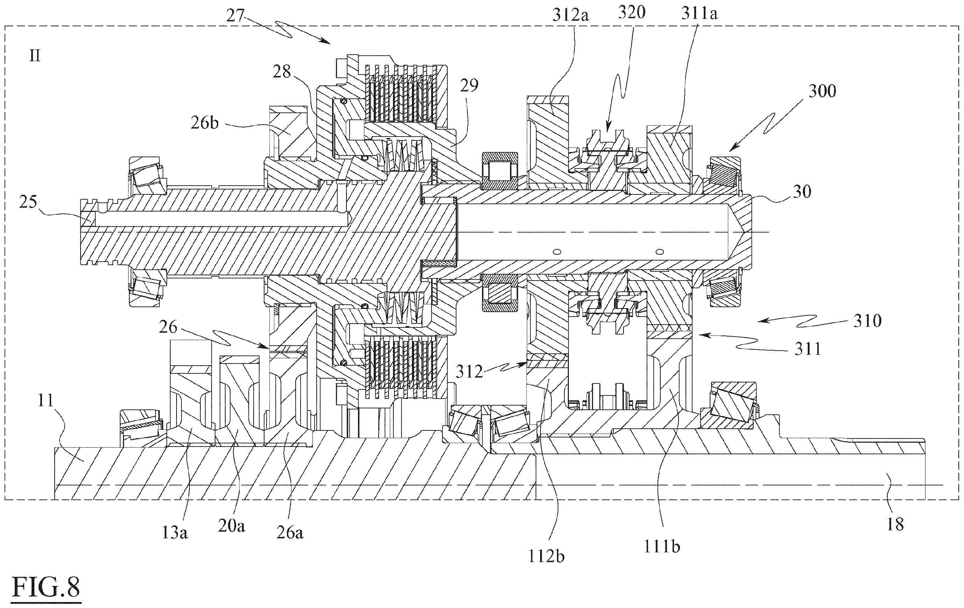

As illustrated in figure 8, the transmission unit 10 comprises a third driving shaft 25 and a third transmission member adapted to mechanically connect the input shaft 11 to said third driving shaft 25.

The third driving shaft 25 is parallel and eccentric both to the input shaft 11 and to the first driving shaft 12 and to the second driving shaft 19.

The third transmission member comprises a gear 26, which makes a higher gear ratio than the gear ratio of the gear 20 of the second transmission member.

For example, the gear 26 makes a gear ratio comprised between 1 and 1.3, preferably equal to 1.17.

The gear 26 of the third transmission member comprises a first toothed wheel 26a rotating as a unit with the input shaft 11 and a second toothed wheel 26b, which rotates as a unit with the third driving shaft 25 and engages with the first toothed wheel 26a.

The toothed wheels 26a,26b are for example toothed wheels with straight teeth.

In an alternative embodiment, the third transmission member can comprise, instead of the gear 26, a pair of toothed wheels connected through a flexible transmission member, for example a chain, and configured to make the same gear ratio as the gear 26.

The transmission unit 10 comprises a third clutch 27 equipped with a first portion 28 associated with the third driving shaft 25, a second portion 29 opposite the first portion 28 and means for selectively coupling in rotation and decoupling the first portion 28 and the second portion 29.

The first portion 29 of the third clutch 27 is rigidly connected to an end of the third driving shaft 25, for example to the distal end from the output shaft 4 of the motor 3.

The third clutch 27 is entirely contained inside the casing and can for example be a multi-disc clutch in an oil bath.

The transmission unit 10 comprises a third driven shaft 30, which is equipped with an end connected to the second portion 29 of the third clutch 27 and is, for example, coaxial to the third driving shaft 25.

The transmission unit 10 comprises a third discontinuous speed gear 300 adapted to mechanically connect the third driven shaft 30 to the output shaft 18.

The third speed gear 300 is substantially identical to the second speed gear 200 and mirrors it with respect to the output shaft 18 of the transmission unit 10.

The third speed gear 300 comprises a group of gears 310 selectively adapted for connecting the third driven shaft 30 with the output shaft 18.

The group of gears 310 of the third speed gear 300 comprises a first gear 311 and a second gear 312 configured to make a higher gear ratio than the gear ratio of the first gear 311.

For example, the gear ratio of the first gear 311 of the third speed gear 300 is equal to the gear ratio of the first gear 111 of the first speed gear 100 and the gear ratio of the second gear 312 of the third speed gear 300 is equal to the gear ratio of the second gear 112 of the first speed gear 100.

The gears 311,312 of the third speed gear 300 are positioned so that going from the end of the third driven shaft 30 proximal to the third clutch 27 to the distal end firstly the second gear 312 is encountered, then the first gear 311. This does not rule out the possibility that the group of gears 310 can comprise further gears so as to increase the number of gear ratios available.

Every gear 311,312 of the third speed gear 300 comprises a respective first toothed wheel 311a,312a rotatably associated with the third driven shaft 30 and a respective second toothed wheel that coincides with a corresponding second toothed wheel 111b,112b of the first speed gear 100.

Every second toothed wheel 111b,112b rotates as a unit with the output shaft 18 of the transmission unit 10 and engages with the corresponding first toothed wheel 111a,112a of the first speed gear 100, with the corresponding first toothed wheel 211a,212a of the second speed gear 200, and with the corresponding first toothed wheel 311a,312a of the third speed gear 300.

Every first toothed wheel 311a,312a is rotatably associated with the third driven shaft 30 of the transmission unit 10 through a bearing, for example a roller bearing.

The toothed wheels of the third speed gear 300 are for example of the type with straight teeth.

The third speed gear 300 is equipped with a selection device configured to fixedly connect one first toothed wheel 311a,312a at a time of the group of gears 310 to the third driven shaft 30.

The selection device of the third speed gear 300 can be actuated at the same time as the selection device of the first speed gear 100 and as the selection device of the second speed gear 200.

The selection device of the third speed gear 300 comprises a synchroniser 320 axially interposed between the second gear 312 and the first gear 311 and mobile between a first position, in which it carries the third driven shaft 30 to the speed of the first toothed wheel 311a and then rigidly connects such a first toothed wheel 311a to the third driven shaft 30, a second position, in which it carries the third driven shaft 30 to the speed of the first toothed wheel 312a and then rigidly connects such a first toothed wheel 312a to the third driven shaft 30, and a third position, in which it does not connect any first toothed wheel 311a,312a to the third driven shaft 30 and it does not act on the speed of the third driven shaft 30.

The synchroniser 320 is a device of the type known to those skilled in the art and therefore is not described any further.

The selection device of the third speed gear 300 comprises actuation means of the synchroniser 320, such actuation means being neither described nor illustrated since they are of the type known to those skilled in the art.

In an alternative embodiment, the selection device of the third speed gear 300 can comprise, replacing the synchroniser 320, at least one electric motor configured to carry the third driven shaft 30 to the speed of the first toothed wheel 311a,312a to be made fixedly connected to said third driven shaft 30 and a coupling apparatus adapted for making said first toothed wheel 311a,312a rotate as a unit with the third driven shaft 30.

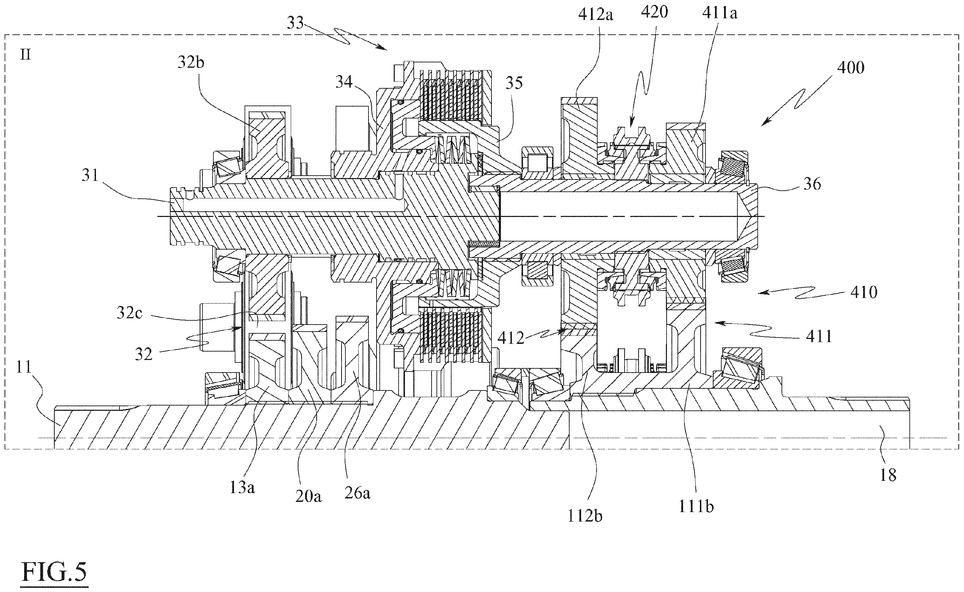

As illustrated in figure 5, the transmission unit 10 comprises a fourth driving shaft 31 and a fourth transmission member adapted to mechanically connect the input shaft 11 to said fourth driving shaft 31.

The fourth driving shaft 31 is parallel and eccentric both to the input shaft 11 and to the first driving shaft 12 and to the second driving shaft 19.

For example, the axes of the first driving shaft 12 and of the fourth driving shaft 31 lie on a plane containing the axis of the input shaft 11 and substantially perpendicular to a plane passing through the axes of the second driving shaft 19 and of the third driving shaft 25 and containing the axis of the input shaft 11.

The fourth transmission member comprises a gear 32, which carries out the inversion of the rotary motion with respect to the input shaft 11.

For example, the gear 32 makes a gear ratio comprised between 0.9 and 1.1, preferably equal to 1.

The gear 32 of the fourth transmission member comprises a first toothed wheel rotating as a unit with the input shaft 11 that corresponds to the first toothed wheel 13a of the first transmission member, and a second toothed wheel 32b, which rotates as a unit with the fourth driving shaft 31 and engages with the first toothed wheel 32a through a third toothed wheel 32c (which acts as a free wheel).

The toothed wheels 32b,32c are for example toothed wheels with straight teeth.

The first toothed wheels 13a,20a,26a respectively of the first and of the fourth transmission member, of the second transmission member and of the third transmission member are positioned so that going from the end of the input shaft 11 proximal to the output shaft 4 of the motor 3 to the distal end the following are encountered in order: the first toothed wheel 13a of the first transmission member and of the fourth transmission member, the first toothed wheel 20a of the second transmission member and the first toothed wheel 26a of the third transmission member.

In an alternative embodiment, not falling within the wording of claim 1, the fourth transmission member can comprise, instead of the gear 32, a pair of toothed wheels connected through a flexible transmission member, for example a chain, and configured to make the same gear ratio as the gear 32.

In another alternative embodiment not falling within the wording of claim 1, the first transmission member, the second transmission member, the third transmission member and the fourth transmission member can be replaced by a single transmission member equipped with a single flexible transmission member that transmits the motion from a toothed wheel fixedly connected to the input shaft 11 to toothed wheels fixedly connected to the respective driving shafts 12,19,25,31.

This does not rule out the possibility that in a further alternative embodiment, at least one among the first, the second, the third and the fourth transmission member, consists of a discontinuous speed gear, for example of an analogous type to those described in the patent application in object and equipped with at least one pair of gears selectively selectable for the transmission of the motion from the input shaft to a respective driving shaft.

In this way, since the number of speeds of the vehicle is given by the product of the number of gear ratios (provided by the possible gear speeds of the transmission members) with the number of gear ratios provided by the respective speed gears 100,200,300,400, a transmission unit is made that, despite providing a large number of gear speeds, is more compact with respect to the devices of the prior art with an equivalent number of gear speeds.

The transmission unit 10 comprises a fourth clutch 33 equipped with a first portion 34 associated with the fourth driving shaft 31, a second portion 35 opposite the first portion 34 and means for selectively coupling in rotation and decoupling the first portion 34 and the second portion 35.

The first portion 34 of the fourth clutch 33 is rigidly connected to an end of the fourth driving shaft 31, for example to the distal end from the output shaft 4 of the motor 3.

The fourth clutch 33 is entirely contained inside the casing and can for example be a multi-disc clutch in an oil bath.

The transmission unit 10 comprises a fourth driven shaft 36, which is equipped with an end connected to the second portion 35 of the fourth clutch 33 and is, for example, coaxial to the fourth driving shaft 31.

The transmission unit 10 comprises a fourth discontinuous speed gear 400 adapted to mechanically connect the fourth driven shaft 36 to the output shaft 18.

The fourth speed gear 400 is substantially identical to the first speed gear 100 and mirrors it with respect to the output shaft 18 of the transmission unit 10.

The fourth speed gear 400 comprises a group of gears 410 selectively adapted for connecting the fourth driven shaft 36 with the output shaft 18.

The group of gears 410 of the fourth speed gear 400 comprises a first gear 411 and a second gear 412 configured to make a higher gear ratio than the gear ratio of the first gear 411.

For example, the gear ratio of the first gear 411 of the fourth speed gear 400 is equal to the gear ratio of the first gear 111 of the first speed gear 100 and the gear ratio of the second gear 412 of the fourth speed gear 400 is equal to the gear ratio of the second gear 112 of the first speed gear 100.

The gears 411,412 of the fourth speed gear 400 are positioned so that going from the end of the fourth driven shaft 36 proximal to the fourth clutch 33 to the distal end firstly the second gear 412 is encountered, then the first gear 411.

This does not rule out the possibility that the group of gears 410 can comprise further gears so as to increase the number of gear ratios available.

Every gear 411,412 of the fourth speed gear 400 comprises a respective first toothed wheel 411a,412a rotatably associated with the fourth driven shaft 36 and a respective second toothed wheel that coincides with a corresponding second toothed wheel 111b,112b of the first speed gear 100.

Every second toothed wheel 111b,112b rotates as a unit with the output shaft 18 of the transmission unit 10 and engages with the corresponding first toothed wheel 111a,112a of the first speed gear 100, with the corresponding first toothed wheel 211a,212a of the second speed gear 200, and with the corresponding first toothed wheel 311a,312a of the third speed gear 300, and with the corresponding first toothed wheel 411a,412a of the fourth speed gear 400.

Every first toothed wheel 411a,412a is rotatably associated with the fourth driven shaft 36 of the transmission unit 10 through a bearing, for example a roller bearing.

The toothed wheels of the fourth speed gear 400 are for example of the type with straight teeth.

The fourth speed gear 400 is equipped with a selection device configured to fixedly connect one first toothed wheel 411a,412a at a time of the group of gears 410 to the fourth driven shaft 36.

The selection device of the fourth speed gear 400 can be actuated at the same time as the selection device of the first speed gear 100, as the selection device of the second speed gear 200 and as the selection device of the third speed gear 300.

The selection device of the fourth speed gear 400 comprises a synchroniser 420 axially interposed between the second gear 412 and the first gear 411 and mobile between a first position, in which it carries the fourth driven shaft 36 to the speed of the first toothed wheel 411a and then rigidly connects such a first toothed wheel 411a to the fourth driven shaft 36, a second position, in which it carries the fourth driven shaft 36 to the speed of the first toothed wheel 412a and then rigidly connects such a first toothed wheel 412a to the fourth driven shaft 36, and a third position, in which it does not connect any first toothed wheel 411a,412a to the fourth driven shaft 36 and it does not act on the speed of the fourth driven shaft 36.

The synchroniser 420 is a device of the type known to those skilled in the art and therefore not described any further.

The selection device of the fourth speed gear 400 comprises actuation means of the synchroniser 420, such actuation means being neither described nor illustrated since they are of the type known to those skilled in the art.

In an alternative embodiment the selection device of the fourth speed gear 400 can comprise, instead of the synchroniser 420, at least one electric motor configured to carry the fourth driven shaft 36 to the speed of the first toothed wheel 411a,412a to be fixedly connected to said fourth driven shaft 36 and a coupling apparatus adapted for making said first toothed wheel 411a,412a rotate as a unit with the fourth driven shaft 36.

The transmission unit 10 comprises a control unit 7 for controlling and actuating the clutches 14,21,27,33 and the speed gears 100,200,300,400 of the transmission unit itself.

The transmission unit can comprise a differential connected to the output shaft 17 and a pair of half-axes adapted for connecting the driving wheels 5 to the differential.

The transmission unit 10 can also comprise a transmission shaft interposed between the output shaft 17 of the transmission unit 10 and the differential 23.

The operation of the actuator 10 according to the invention is as follows.

With the vehicle 1 stationary, the synchronisers 120,220,320,420 do not act on the groups of gears 110,210,310,410 and the rotary motion of the output shaft 4 of the motor 3 is not transmitted to the output shaft 18 of the transmission unit 10.

When the driver of the vehicle 1 acts on the control means 6 to make said vehicle 1 advance, the control station 7 acts on the clutches 14,21,27,33 decoupling the driving shafts 12,19,25,31 from the respective driven shafts 17,24,30,36.

In this step the control station 7 also acts on the synchronisers 120,220,320,420 of the respective speed gears 100,200,300,400 making the first toothed wheels 111a,211 a,311a,411a of the first gears 111,211,311,411 fixedly connected to the corresponding driven shafts 17,24,30,36.

Once this step has ended, the control station 7 actuates only the first clutch 14 coupling the first driven shaft 17 with the first driving shaft 12.

In this way, the transmission unit 10 makes a first overall gear ratio, in which the motion is transmitted through the first transmission member and the first gear 111 of the first speed gear 100.

It should be specified that the term overall gear ratio is meant to indicate the ratio between the rotation speed of the output shaft 18 and the rotation speed of the input shaft 11 of the transmission unit 10.

When the vehicle 1 reaches the maximum and/or desired speed made available by the first overall gear ratio, the control station 7 acts on the first clutch 14 decoupling the first driven shaft 17 from the first driving shaft 12.

Then the control station 7 actuates the second clutch 21 coupling in rotation the second driven shaft 24 with the secondo driving shaft 19.

By doing so, the transmission unit 10 makes a second overall gear ratio, in which the motion is transmitted through the second transmission member and the first gear 211 of the second speed gear 200.

Once the vehicle 1 has reached the maximum and/or desired speed made available by the second overall gear ratio, the control station 7 acts on the second clutch 21 decoupling the second driven shaft 24 from the second driving shaft 19.

Thereafter the control station 7 actuates the third clutch 27 coupling the third driven shaft 30 with the third driving shaft 25.

In this way, the transmission unit 10 makes a third overall gear ratio, in which the motion is transmitted through the third transmission member and the first gear 311 of the third speed gear 300.

At the same time as this step, the control station 7 actuates the synchroniser 120 of the first speed gear 100 making the first toothed wheel 112a of the second gear 112 fixedly connected to the first driven shaft 17.

In this way, whereas the motion is transmitted through the third transmission member and the first gear 311 of the third speed gear 300, the transmission unit 10 provides the higher overall gear ratio, also keeping the lower gear ratio (i.e. in this case made available by the second transmission member and by the first gear 211 of the second speed gear 200).

For example, in the same step, the control station 7 can actuate the synchroniser 420 of the fourth speed gear 400 making the first toothed wheel 412a of the second gear 412 fixedly connected to the fourth driven shaft 36.

At the moment when the vehicle 1 reaches the maximum and/or desired speed made available by the third overall gear ratio, the control station 7 actuates the third clutch 27 decoupling the third driven shaft 30 from the third driving shaft 25.

At the same time, the control station 7 actuates the first clutch 14 coupling the first driven shaft 17 with the first driving shaft 12.

By doing so, the transmission unit 10 makes a fourth overall gear ratio, in which the motion is transmitted through the first transmission member and the second gear 112 of the first speed gear 100.

In this step, the control station also acts on the synchroniser 220 of the second speed gear 200 making the first toothed wheel 212a of the second gear 212 fixedly connected to the second driven shaft 24.

When the vehicle 1 reaches the maximum and/or desired speed made available by the fourth overall gear ratio, the control station 7 acts on the first clutch 14, decoupling the first driven shaft 17 from the first driving shaft 12, and then on the second clutch 21 coupling in rotation the second driven shaft 24 with the second driving shaft 19.

In this way, the transmission unit 10 makes a fifth overall gear ratio, in which the motion is transmitted through the second transmission member and the second gear 212 of the second speed gear 200.

At the same time, the control station 7 actuates the synchroniser 320 of the third speed gear making the first toothed wheel 312a of the second gear 312 fixedly connected to the third driven shaft 30.

Once the vehicle 1 has reached the maximum and/or desired speed made available by the fifth overall gear ratio, the control station 7 acts on the second clutch 21 decoupling the second driven shaft 24 from the second driving shaft 19 and thereafter actuates the third clutch 27 coupling the third driven shaft 30 with the third driving shaft 25.

By doing so, the transmission unit 10 makes a sixth, and last, overall gear ratio, in which the motion is transmitted through the third transmission member and the second gear 312 of the third speed gear 300.

What has been described up to now is the operation of the transmission unit 10 in normal conditions of use.

In abnormal conditions of use, always having a higher overall gear ratio and a lower overall gear ratio ready with respect to the one in use, it is possible to carry out the gear change quickly without having to actuate the synchronisers during said gear change operation, by simply acting on the clutches to decouple the shafts that make the gear ratio in use and coupling the shafts of the desired gear ratio.

For example, in the case in which the vehicle is advancing exploiting the third overall gear ratio and instead of proceeding to the fourth overall gear ratio it is necessary to return to the second overall gear ratio, the control station 7 simply actuates the third clutch 27 decoupling the third driven shaft 30 from the third driving shaft 25 and then actuates the second clutch 21 coupling in rotation the second driven shaft 24 with the second driving shaft 19 so that the motion is transmitted through the first gear 211 of the second speed gear 200 that had been pre-engaged in a prior actuated step of the transmission unit 10.

Moreover, in the case in which the driver wishes to reverse the direction of travel of the vehicle 1, the control station 7 can at any moment actuate the clutch 14,21,27 through which the motion was transmitted up to that moment, decoupling the respective driven shaft from the driving shaft, and then actuating the fourth clutch 33 coupling in rotation the fourth driven shaft 36 with the fourth driving shaft 31 to make a reverse.

It is also possible to have intermediate operating configurations between those just described to adapt to possible other requirements of use of the vehicle 1.

For example, the control station 7 could pass directly from the first overall gear ratio to the third overall gear ratio to eliminate the time necessary for the gear change that makes the second gear ratio.

## Claims

1. A transmission unit (10) for motor vehicles (1), comprising:
- an input shaft (11) adapted to be connected to the motor (3),
- an output shaft (18) adapted to be connected to at least one driving wheel (5) of the vehicle (1),
- a first transmission member adapted to connect the input shaft (11) to a first driving shaft (12), wherein the first transmission member comprises a gear (13) which comprises a first toothed wheel (13a) rotating as a unit with the input shaft (11) and a second toothed wheel (13b), which rotates as a unit with the first driving shaft (12) and engages with the first toothed wheel (13a),
- a first discontinuous speed gear (100) adapted to connect a first driven shaft (17) with the output shaft (18),
- a first clutch (14) interposed between the first driving shaft (12) and the first driven shaft (17),
- a second transmission member adapted to connect the input shaft (11) to a second driving shaft (19), wherein the second transmission member comprises a gear (20), which makes a higher gear ratio than the gear ratio of the gear (13) of the first transmission member and which comprises a first toothed wheel (20a) rotating as a unit with the input shaft (11) and a second toothed wheel (20b), which rotates as a unit with the second driving shaft (19) and engages with the first toothed wheel (20a),
- a second discontinuous speed gear (200) adapted to connect a second driven shaft (24) with the output shaft (18),
- a second clutch (21) interposed between the second driving shaft (19) and the second driven shaft (24),
- a third transmission member adapted to connect the input shaft (11) to a third driving shaft (25), wherein the third transmission member comprises a gear (26), which makes a higher gear ratio than the gear ratio of the gear (20) of the second transmission member and which comprises a first toothed wheel (26a) rotating as a unit with the input shaft (11) and a second toothed wheel (26b), which rotates as a unit with the third driving shaft (25) and engages with the first toothed wheel (26a),
- a third discontinuous speed gear (300) adapted to connect a third driven shaft (30) with the output shaft (18), and
- a third clutch (27) interposed between the third driving shaft (25) and the third driven shaft (30)
said transmission unit (10) being **characterised by** the fact that it comprises:
- a fourth transmission member adapted to connect the input shaft (11) to a fourth driving shaft (31) and comprising a gear (32), which comprises the first toothed wheel (13a) of the first transmission member, rotating as a unit with the input shaft (11), and a second toothed wheel (32b), which rotates as a unit with the fourth driving shaft (31) and engages with the first toothed wheel (32a) through a third toothed wheel (32c),
- a fourth discontinuous speed gear (400) adapted to connect a fourth driven shaft (36) with the output shaft, and
- a fourth clutch (33) interposed between the fourth driving shaft (31) and the fourth driven shaft (36).

2. The transmission unit (10) according to claim 1, wherein the first discontinuous speed gear (100), the second discontinuous speed gear (200) and the third discontinuous speed gear (300) are mesh gearboxes.

3. The transmission unit (10) according to claim 1, wherein the first discontinuous speed gear (100), the second discontinuous speed gear (200), the third discontinuous speed gear (300) and the fourth speed gear (400) are substantially identical.

4. The transmission unit (10) according to claim 1, wherein the first driving shaft (12), the second driving shaft (19), the third driving shaft (25) and the fourth driving shaft (31) are parallel to the input shaft (11) and eccentric relative thereto.

5. The transmission unit (10) according to claim 1, comprising a management control unit (7) which is configured to implement a predetermined overall gear ratio in the first discontinuous speed gear (100), the overall higher gear ratio in the second discontinuous speed gear (200) and the overall lower gear ratio in the third discontinuous speed gear (300).

## Patentansprüche

1. Übertragungseinheit (10) für Kraftfahrzeuge (1), umfassend:
- eine Eingangswelle (11), die geeignet ist an den Motor (3) angeschlossen zu werden,
- eine Ausgangswelle (18), die geeignet ist an das mindestens eine Antriebsrad (5) des Fahrzeugs (1) angeschlossen zu werden,
- ein erstes Übertragungselement, das geeignet ist, die Eingangswelle (11) an eine erste Antriebswelle (12) anzuschließen, wobei das erste Übertragungselement ein Getriebe (13) umfasst, das ein erstes Zahnrad (13a), das sich als Einheit mit der Eingangswelle (11) dreht, und ein zweites Zahnrad (13b), das sich als Einheit mit der ersten Antriebswelle (12) dreht und mit dem ersten Zahnrad (13a) in Eingriff steht, umfasst,
- ein erstes Getriebe (100) mit diskontinuierlicher Geschwindigkeit, das geeignet ist eine erste angetriebene Welle (17) an die Ausgangswelle (18) anzuschließen,
- eine erste Kupplung (14), die zwischen der ersten Antriebswelle (12) und der ersten angetriebenen Welle (17) angeordnet ist,
- ein zweites Übertragungselement, das geeignet ist, die Eingangswelle an eine zweite Antriebswelle (19) anzuschließen, wobei das zweite Übertragungselement ein Getriebe (20) umfasst, das ein höheres Übersetzungsverhältnis als das Übersetzungsverhältnis des Getriebes (13) des ersten Übertragungselements aufweist, und das ein erstes Zahnrad (20a), das sich als Einheit mit der Eingangswelle (11) dreht und ein zweites Zahnrad (20b), das sich als Einheit mit der zweiten Antriebswelle (19) dreht und mit dem ersten Zahnrad (20a) in Eingriff steht, umfasst,
- ein zweites Getriebe (200) mit diskontinuierlicher Geschwindigkeit, das geeignet ist, eine zweite angetriebene Welle (24) an die Ausgangswelle (18) anzuschließen,
- eine zweite Kupplung (21), die zwischen der zweiten Antriebswelle (19) und der zweiten angetriebenen Welle (24) angeordnet ist,
- ein drittes Übertragungselement, das geeignet ist, die Eingangswelle (11) an eine dritte Antriebswelle (25) anzuschließen, wobei das dritte Übertragungselement ein Getriebe (26) umfasst, das ein höheres Übersetzungsverhältnis als das Übersetzungsverhältnis des Getriebes (20) des zweiten Übertragungselements aufweist, und das ein erstes Zahnrad (26a), das sich als Einheit mit der Eingangswelle (11) dreht und ein zweites Zahnrad (26b), das sich als Einheit mit der dritten Antriebswelle (25) dreht und mit dem ersten Zahnrad (26a) in Eingriff steht, umfasst,
- ein drittes Getriebe (300) mit diskontinuierlicher Geschwindigkeit, das geeignet ist, eine dritte angetriebene Welle (30) an die Ausgangswelle (18) anzuschließen, und
- eine dritte Kupplung (27), die zwischen der dritten Antriebswelle (25) und der dritten angetriebenen Welle (30) angeordnet ist,
wobei die Übertragungseinheit (10) **dadurch gekennzeichnet ist, dass** sie Folgendes umfasst:
- ein viertes Übertragungselement, das geeignet ist, die Eingangswelle (11) an eine vierte Antriebswelle (31) anzuschließen und das ein Getriebe (32) umfasst, das das erste Zahnrad (13a) des ersten Übertragungselements, das sich als Einheit mit der Eingangswelle (11) dreht, und ein zweites Zahnrad (32b), das sich als Einheit mit der vierten Antriebswelle (31) dreht und durch ein drittes Zahnrad (32c) mit dem ersten Zahnrad (32a) in Eingriff steht, umfasst,
- ein viertes Getriebe (400) mit diskontinuierlicher Geschwindigkeit, das geeignet ist, eine vierte angetriebene Welle (36) an die Ausgangswelle anzuschließen, und
- eine vierte Kupplung (33), die zwischen der vierten Antriebswelle (31) und der vierten angetriebenen Welle (36) angeordnet ist,

2. Übertragungseinheit (10) nach Anspruch 1, wobei das erste Getriebe (100) mit diskontinuierlicher Geschwindigkeit, das zweite Getriebe (200) mit diskontinuierlicher Geschwindigkeit und das dritte Getriebe (300) mit diskontinuierlicher Geschwindigkeit Eingriffsgetriebe sind.

3. Übertragungseinheit (10) nach Anspruch 1, wobei das erste Getriebe (100) mit diskontinuierlicher Geschwindigkeit, das zweite Getriebe (200) mit diskontinuierlicher Geschwindigkeit, das dritte Getriebe (300) mit diskontinuierlicher Geschwindigkeit und das vierte Geschwindigkeitsgetriebe (400) im Wesentlichen identisch sind.

4. Übertragungseinheit (10) nach Anspruch 1, wobei die erste Antriebswelle (12), die zweite Antriebswelle (19), die dritte Antriebswelle (25) und die vierte Antriebswelle (31) parallel zur Eingangswelle (11) und exzentrisch dazu sind.

5. Übertragungseinheit (10) nach Anspruch 1, umfassend eine Verwaltungssteuereinheit (7), die konfiguriert ist, um ein vorbestimmtes Gesamtübersetzungsverhältnis in dem ersten Getriebe (100) mit diskontinuierlicher Geschwindigkeit; das höhere Gesamtübersetzungsverhältnis in dem zweiten Getriebe (200) mit diskontinuierlicher Geschwindigkeit und das niedrigere Gesamtübersetzungsverhältnis im dritten Getriebe (300) mit diskontinuierlicher Geschwindigkeit zu implementieren.

## Revendications

1. Unité de transmission (10) pour véhicules à moteur (1) comprenant :
- un arbre d'entrée (11) apte à être relié au moteur (3),
- un arbre de sortie (18) apte à être relié à au moins une roue motrice (5) du véhicule (1),
- un premier élément de transmission apte à relier l'arbre d'entrée (11) à un premier arbre d'entraînement (12), dans laquelle le premier élément de transmission comprend un engrenage (13) qui comprend une première roue dentée (13a) tournant comme une unité avec l'arbre d'entrée (11) et une deuxième roue dentée (13b), qui tourne comme une unité avec le premier arbre d'entraînement (12) et vient en prise avec la première roue dentée (13a),
- un premier engrenage de vitesse discontinu (100) apte à relier un premier arbre entraîné (17) avec l'arbre de sortie (18),
- un premier embrayage (14) entreposé entre le premier arbre d'entraînement (12) et le premier arbre entraîné (17),
- un deuxième élément de transmission apte à relier l'arbre d'entrée à un deuxième arbre d'entraînement (19), dans laquelle le deuxième élément de transmission comprend un engrenage (20), qui réalise un rapport d'engrenage supérieur au rapport d'engrenage de l'engrenage (13) du premier élément de transmission et qui comprend une première roue dentée (20a) tournant comme une unité avec l'arbre d'entrée (11) et une deuxième roue dentée (20b), qui tourne comme une unité avec le deuxième arbre d'entraînement (19) et vient en prise avec la première roue dentée (20a),
- un deuxième engrenage de vitesse discontinu (200) apte à relier un deuxième arbre entraîné (24) avec l'arbre de sortie (18),
- un deuxième embrayage (21) entreposé entre le deuxième arbre d'entraînement (19) et le deuxième arbre entraîné (24),
- un troisième élément de transmission apte à relier l'arbre d'entrée (11) à un troisième arbre d'entraînement (25), dans laquelle le troisième élément de transmission comprend un engrenage (26), qui réalise un rapport d'engrenage supérieur au rapport d'engrenage de l'engrenage (20) du deuxième élément de transmission et qui comprend une première roue dentée (26a) tournant comme une unité avec l'arbre d'entrée (11) et une deuxième roue dentée (26b), qui tourne comme une unité avec le troisième arbre d'entraînement (25) et vient en prise avec la première roue dentée (26a),
- un troisième engrenage de vitesse discontinu (300) apte à relier un troisième arbre entraîné (30) avec l'arbre de sortie (18), et
- un troisième embrayage (27) entreposé entre le troisième arbre d'entraînement (25) et le troisième arbre entraîné (30)
ladite unité de transmission (10) étant **caractérisée par le fait qu'**elle comprend :
- un quatrième élément de transmission apte à relier l'arbre d'entrée (11) à un quatrième arbre d'entraînement (31) et comprenant un engrenage (32), qui comprend une première roue dentée (13a) du premier élément de transmission, tournant comme une unité avec l'arbre d'entrée (11) et une deuxième roue dentée (32b), qui tourne comme une unité avec le quatrième arbre d'entraînement (31) et vient en prise avec la première roue dentée (32a) à travers une troisième roue dentée (32c),
- un quatrième engrenage de vitesse discontinu (400) apte à relier un quatrième arbre entraîné (36) avec l'arbre de sortie, et
- un quatrième embrayage (33) entreposé entre le quatrième arbre d'entraînement (31) et le quatrième arbre entraîné (36).

2. Unité de transmission (10) selon la revendication 1, dans laquelle le premier engrenage de vitesse discontinu (100), le deuxième engrenage de vitesse discontinu (200) et le troisième engrenage de vitesse discontinu (300) sont des boîtes de vitesses à prise.

3. Unité de transmission (10) selon la revendication 1, dans laquelle le premier engrenage de vitesse discontinu (100), le deuxième engrenage de vitesse discontinu (200), le troisième engrenage de vitesse discontinu (300) et le quatrième engrenage de vitesse discontinu (400) sont sensiblement identiques.

4. Unité de transmission (10) selon la revendication 1, dans laquelle le premier arbre d'entraînement (12), le deuxième arbre d'entraînement (19), le troisième arbre d'entraînement (25) et le quatrième arbre d'entraînement (31) sont parallèles à l'arbre d'entrée (11) et excentriques par rapport à celui-ci.

5. Unité de transmission (10) selon la revendication 1, comprenant une unité de contrôle de gestion (7) qui est configurée pour mettre en œuvre un rapport d'engrenage global prédéterminé dans le premier engrenage de vitesse discontinu (100), le rapport d'engrenage globalement supérieur dans le deuxième engrenage de vitesse discontinu (200) et le rapport d'engrenage globalement inférieur dans le troisième engrenage de vitesse discontinu (300).
